Europäisches Patentamt

European Patent Office

Office européen des brevets

(11) Veröffentlichungsnummer: **0 372 441**
**A1**

# (12) EUROPÄISCHE PATENTANMELDUNG

(21) Anmeldenummer: 89122288.7

(22) Anmeldetag: 02.12.89

(51) Int. Cl.⁵: **G08B 13/19, G08C 23/00**

(30) Priorität: 08.12.88 DE 8815287 U

(43) Veröffentlichungstag der Anmeldung:
**13.06.90 Patentblatt 90/24**

(84) Benannte Vertragsstaaten:
**AT BE CH DE FR GB LI NL**

(71) Anmelder: **Asea Brown Boveri**
**Aktiengesellschaft**
**Kallstadter Strasse 1**
**D-6800 Mannheim 31(DE)**

(72) Erfinder: **Hilburg, Jürgen**
**Käsbergstrasse 2**
**D-5800 Hagen 7(DE)**
Erfinder: **Zapp, Robert**
**Löher Weg 35**
**D-5885 Schalksmühle(DE)**

(74) Vertreter: **Rupprecht, Klaus, Dipl.-Ing. et al**
**c/o Asea Brown Boveri Aktiengesellschaft**
**Zentralbereich Patente Postfach 100351**
**D-6800 Mannheim 1(DE)**

(54) **Passiv-Infrarot Bewegungsmelder.**

(57) Um bei festvorgegeben installierten manuell ein- bzw. ausschaltbaren Schaltgeraten zusätzlich ein in Abhängigkeit von der Infrarot-Strahlung eines wärmestrahlungemittierenden Objekts zu steuerndes Schalten elektrischer Verbraucher automatisch und kostengünstig zu erreichen, wird erfindungsgemäß vorgeschlagen, daß ein Infrarot-Sendeteil (2) unmittelbar neben einem Passiv-Infrarot-Bewegungsmelder oder (1) im Passiv-Infrarot-Bewegungsmelder (1) räumlich integriert angeordnet ist, daß ein Infrarot-Empfangsteil (4) den Schaltkontakt (6) des Schaltgerats (8) beaufschlagt, und daß für den Passiv-Infrarot-Bewegungsmelder (1) und den Infrarot-Sendeteil (2) eine gemeinsame oder jeweils eine eigene netzunabhängige Stromversorgung (3) vorgesehen ist.

Erfindungsgemäß wird in vorteilhafter Weise erreicht, daß der Passiv-Infrarot-Bewegungsmelder netzunabhängig an allen Stellen installiert werden kann, die es ermöglichen, das vom zu detektierenden Objekt auszulösende Schalten eines elektrischen Verbrauchers zu bewirken. Eine Leitungsverbindung zwischen dem Passiv-Infrarot-Bewegungsmelder und dem Schaltgerat des zu schaltenden elektrischen Verbrauchers kann damit entfallen. Neben der Kostenersparnis ist eine individuellen Erfordernissen gerechtwerdende Anordnung der erfindungsgemäßen Vorrichtung möglich.

Fig.1

## Passiv-Infrarot-Bewegungsmelder

Die Erfindung betrifft einen Passiv-Infrarot-Bewegungsmelder mit einer Schaltungsanordnung nach dem Oberbegriff des Anspruchs 1.

Aus der DE-OS 28 41 696 ist ein Infrarot-Fernbedienungsempfänger mit einer Schaltungsanordnung zur Steuerung der Helligkeitsschaltung eines Unterputz-Dimmers bekannt. Hierbei empfängt eine als Infrarot-Empfänger verwendete Infrarot-Diode ein moduliertes Infrarot-Signal, welches von einem Infrarot-Sender zur Steuerung abgegeben wird.

Für bestimmte Anwendungszwecke (automatische Türöffneranlagen, optische oder akustische Signale abgebende Warnvorrichtungen) ist es erforderlich, daß die bekannte Infrarot-Sende/Empfangs-Anordnung nicht manuell ausgelöst wird, sondern automatisch auf die von einem Objekt emittierte Wärmestrahlung anspricht.

Es ist deshalb Aufgabe vorliegender Erfindung, die im Stand der Technik bekannte Schaltungsanordnung so weiterzubilden, daß bei fest vorgegeben installierten und manuell ein- bzw. ausschaltbaren Schaltgeraten ein in Abhängigkeit von der Infrarot-Strahlung eines Wärmestrahlung emittierenden Objekts zu steuerndes Schalten elektrischer Verbraucher automatisch und kostengünstig erfolgen kann.

Diese Aufgabe wird erfindungsgemäß durch die im Anspruch 1 näher gekennzeichneten Merkmale gelöst.

Erfindungsgemäß wird erreicht, daß der Passiv-Infrarot-Bewegungsmelder netzunabhängig an allen Stellen installiert werden kann, die es ermöglichen, das vom zu detektierenden Objekt auszulösende Schalten eines elektrischen Verbrauchers zu bewirken. Hierbei ist es besonders vorteilhaft, daß eine Leitungsverbindung zwischen dem Passiv-Infrarot-Bewegungsmelder und dem Schaltgerät des zu schaltenden elektrischen Verbrauchers entfällt. Neben der hierdurch erzielbaren Kostenersparnis ist insbesondere eine nach individuellen Erfordernissen beliebig variable Anordnung der Teile der erfindungsgemäßen Schaltungsanordnung möglich. Weiter ist auch ein hoher Bedienungskomfort gegeben, da eine manuelle Aktivierung der Schaltungsanordnung nicht erforderlich ist. Weil die erfindungsgemäße Schaltungsanordnung netzunabhängig einfach zu installieren ist, ist auch eine Nachinstallation kostengünstig durchzuführen.

Vorteilhafte Weiterbildungen des Erfindungsgegenstandes sind in den Unteransprüchen näher gekennzeichnet.

Anhand eines in der Zeichnung dargestellten Ausführungsbeispiels soll die Erfindung näher erläutert und beschrieben werden.

Es zeigen:

Figur 1: Ein Prinzipschaltbild der erfindungsgemäßen Schaltungsanordnung,

Figur 2: ein erstes Ausführungsbeispiel des Passiv-Infrarot-Bewegungsmelders nebst Infrarot-Sendeteil 2,

Figur 3: ein zweites Ausführungsbeispiel des Passiv-Infrarot-Bewegungsmelders mit integriert angebrachtem Infrarot-Sendeteil 2.

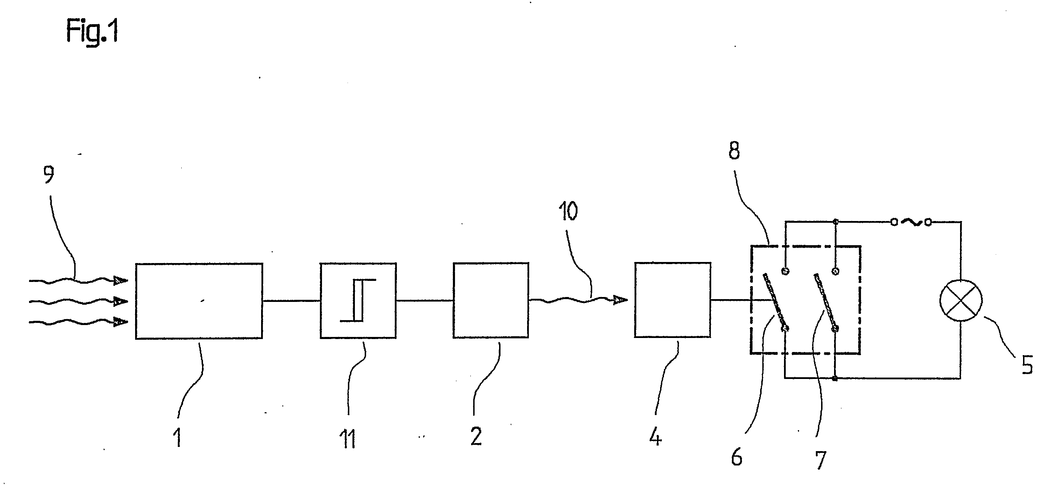

Figur 1 zeigt ein Prinzipschaltbild der erfindungsgemäßen Schaltungsanordnung, wobei auf einen in einem zu überwachenden Raumbereich angeordneten Passiv-Infrarot-Bewegungsmelder 1 Infrarot-Strahlung 9 des zu detektierenden Objekts fällt. Die der Intensität der Infrarot-Strahlung entsprechend erzeugte Stromstärke wird einem die Empfindlichkeit vorgebenden Schwellwertschalter 11 zugeführt, welcher beim Überschreiten eines vorgegebenen festen oder individuell einzustellenden Wertes einen nachgeschalteten Infrarot-Sendeteil 2 veranlaßt, einen vorzugsweise codierten Infrarot-Strahlungsimpuls 10 abzugeben. Der von einem Infrarot-Empfangsteil 4 aufgenommene Infrarot-Strahlungsimpuls 10 wird nach Wandlung in einen Stromimpuls einem ersten Schaltkontakt 6, vorzugsweise einem Halbleiter-Schalter zugeführt, welcher zusätzlich elektrisch parallel zu einem bereits installierten manuell betätigbaren zweiten Schaltkontakt 7 eines Schaltgeräts 8 in die Stromversorgungsleitung für einen oder mehrere elektrische Verbraucher 5 geschaltet ist. Durch die Parallelschaltung der beiden Schaltkontakte 6,7 wird erreicht, daß der Stromversorgungskreis für einen oder mehrere elektrische Verbraucher 5 auch dann geschlossen werden kann, wenn der manuell betätigbare zweite Schaltkontakt 7 geöffnet ist. Selbstverständlich kann hinsichtlich der zwischen dem Passiv-Infrarot-Bewegungsmelder 1 und dem Schaltgerät 8 zu überbrückenden Impuls-Übertragungsstrecke auch mit einem einen Ultraschall-Impuls emittierenden Ultraschall-Sendeteil und einem den Ultraschall-Impuls empfangenden Ultraschall-Empfangsteil gearbeitet werden.

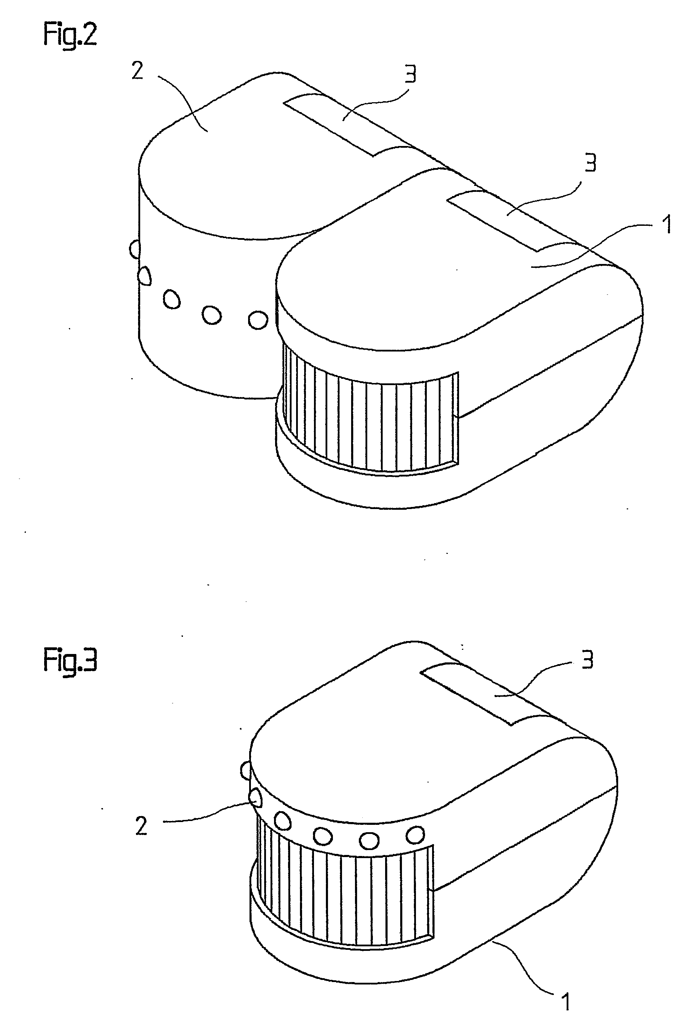

Figur 2 zeigt ein erstes Ausführungsbeispiel des erfindungsgemäß ausgebildeten Passiv-Infrarot-Melders 1, wobei das Infrarot-Sendeteil 2 unmittelbar neben dem Passiv-Infrarot-Bewegungsmelder 1, vorzugsweise schwenkbar angeordnet ist. Als Stromversorgung 3 für den Passiv-Infrarot-Bewegungsmelder 1 und den Infrarot-Sendeteil 2 ist eine netzunabhängig arbeitende Batterie oder eine Photozelle vorgesehen.

Figur 3 zeigt ein zweites Ausführungsbeispiel des erfindungsgemäß ausgebildeten Passiv-Infrarot-Bewegungsmelders 1, bei welchem der Infrarot-Sendeteil 2 räumlich integriert im Passiv-Infrarot-Bewegungsmelder 1 angeordnet ist.

**Ansprüche**

1. Passiv-Infrarot-Bewegungsmelder (1) zum berührungslos ferngesteuerten Aktivieren eines mindestens einen elektrischen Verbraucher (5) schaltenden Schaltgeräts (8) mit einer Schaltungsanordnung aus mindestens einem Infrarot-Sendeteil (2) sowie einem Infrarot-Empfangsteil (4), wobei der Infrarot-Empfangsteil (4) einen nachgeschalteten ersten Schaltkontakt (6) des Schaltgeräts (8) beaufschlagt, dadurch gekennzeichnet, daß der Infrarot-Sendeteil (2) unmittelbar neben dem Passiv-Infrarot-Bewegungsmelder (1) oder im Passiv-Infrarot-Bewegungsmelder (1) räumlich integriert angeordnet ist und daß für den Passiv-Infrarot-Bewegungsmelder (1) und den Infrarot-Sendeteil (2) eine gemeinsame oder jeweils eine eige-ne netzunabhängige Stromversorgung (3) vorgese-hen ist.

2. Passiv-Infrarot-Bewegungsmelder nach Anspruch 1, dadurch gekennzeichnet, daß der Infrarot-Empfangsteil (4) am Schaltgerät (8) integriert angebracht ist.

3. Passiv-Infrarot-Bewegungsmelder nach Anspruch 1 oder 2, dadurch gekennzeichnet, daß der erste Schaltkontakt (6) des Schaltgeräts (8) einem manuell betätigbaren zweiten Schaltkontakt (7) des Schaltgeräts (8) elektrisch parallel geschaltet ist.

4. Passiv-Infrarot-Bewegungsmelder nach einem der vorhergehenden Ansprüche, dadurch gekennzeichnet, daß der Passiv-Infrarot-Bewegungsmelder (1) und/oder der Infrarot-Sendeteil (2) richtungsschwenkbar gehaltert ist.

5. Passiv-Infrarot-Bewegungsmelder nach einem der vorhergehenden Ansprüche, dadurch gekennzeichnet, daß die Stromversorgung (3) durch eine Batterie oder eine Fotozelle bereitgestellt wird.

Fig.1

EP 0 372 441 A1

Fig.2

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | WO-A-8 403 382 (STENMARK) <br> * Seite 3, Zeilen 10-34; Figur 3 * <br> --- | 1 | G 08 B 13/19 <br> G 08 C 23/00 |
| A | ELEKTOR ELECTRONICS, Band 13, Nr. 143, März 1987, Seiten 24-26, London, GB; "Passive infra-red detector type PID-11" <br> * Seite 26, rechte Spalte , Zeilen 14-27; Figur 11 * <br> --- | 1 | |
| A | EP-A-0 274 889 (RACAL-GUARDALL) <br> * Anspruch 1; Figur * <br> --- | 1 | |
| A | US-A-4 679 034 (KAMADA) <br> * Spalte 1, Zeile 52 - Spalte 2, Zeile 2; Spalte 4, Zeilen 32-40; Figuren 1,8 * <br> --- | 1 | |
| A | FR-A-2 524 652 (LEGRAND) <br> * Ansprüche 1,11; Figuren 1,4,5 * <br> --- | 1,2 | |
| A | US-A-4 703 171 (KAHL) <br> * Spalte 8, Zeilen 17-22; Figur 6 * <br> --- | 1,3 | **RECHERCHIERTE SACHGEBIETE (Int. Cl.5)** |
| A | GB-A-2 186 972 (MATSUSHITA) <br> * Seite 3, Zeilen 103-118; Figur 7 * <br> --- | 1,4 | G 08 B <br> G 08 C |
| A | FR-A-2 595 852 (FUSILIER) <br> * Anspruch 1; Figur 1 * <br> --- | 1,4 | |
| A | DE-A-3 230 728 (SIEMENS) <br> * Anspruch; Figur * <br> --- | 1,5 | |
| P,X | DE-U-8 815 287 (ASEA BROWN BOVERI) <br> * Ansprüche 1-5 * <br> ----- | 1-5 | |

Der vorliegende Recherchenbericht wurde für alle Patentansprüche erstellt

| Recherchenort | Abschlußdatum der Recherche | Prüfer |
|---|---|---|
| DEN HAAG | 16-02-1990 | WANZEELE R.J. |